# EUROPEAN PATENT APPLICATION

(11) **EP 4 818 544 A1**
(43) Date of publication of application: **07.10.2026**
(21) Application number: 24896988.3
(22) Date of filing: 07.08.2024
(51) Int. Cl.: F16F 7/00, B62D 3/12

(54) **SHOCK-ABSORBING STOPPER**

(30) Priority: 29.11.2023 JP 2023201632
(71) Applicant: NOK Corporation, Minato-ku Tokyo 105-8585 (JP)
(72) Inventor: HANADA, Yuki, Saihaku-gun, Tottori 683-0362 (JP)
(74) Representative: TBK
(86) International application number: PCT/JP2024/028279
(87) International publication number: WO 2025/115296

(57) **Abstract**

A buffer stopper is disposed between a flange and a protrusion. The flange has a first annular surface that extends from an outer peripheral surface of a shaft movable in an axial direction, and the protrusion has a second annular surface that is spaced apart from and faces the first annular surface and extends from an inner peripheral surface of a housing toward the shaft. The buffer stopper includes: a metal ring that is in contact with the first annular surface; an annular buffer base that is disposed between the metal ring and the second annular surface and is bonded to the metal ring; an annular member that is disposed between the buffer base and the second annular surface and is bonded to the buffer base. The buffer base includes a rubber elastic material. The metal ring is an annular flat plate. The annular member is spaced apart from the metal ring and is disposed radially inward of the buffer base. A stiffness of the annular member is greater than a stiffness of the buffer base.

## Description

### TECHNICAL FIELD

This disclosure relates to buffer stoppers.

### BACKGROUND ART

A steering device is used, for example, in an automobile. The steering device includes a steering wheel operated by a driver, a steering shaft connected to the steering wheel, a pinion gear coaxial with the steering shaft, and a rack bar that includes a rack gear that converts rotation of the pinion gear into axial movement. Movement of the shaft is transmitted to corresponding wheels via tie rods. When the rack bar moves, the tie rods swing allowing the corresponding wheels to be steered. The rack bar is accommodated in a rack housing.

The steering device includes a buffer stopper that reduces impacts between the rack bar and the rack housing caused by swinging of a tie rod. Such a buffer stopper is disclosed in Patent Document 1.

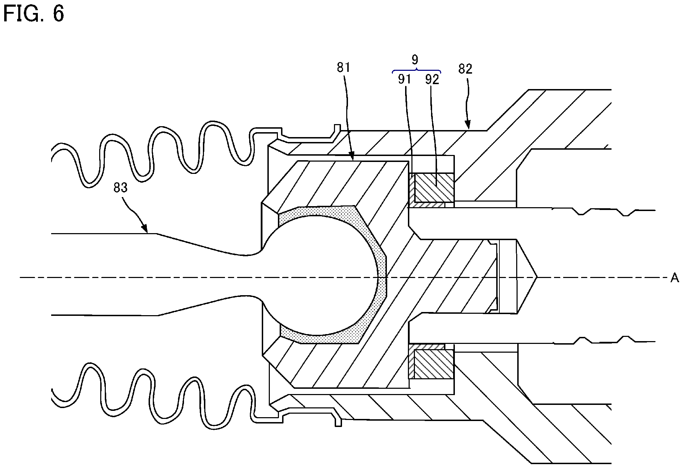

FIG. 6 is a diagram showing a conventional buffer stopper 9. FIG. 6 also shows a rack bar 81, a rack housing 82, and a tie rod 83. The buffer stopper 9 shown in FIG. 6 includes an L-shaped metal ring 91 that is in contact with the rack bar 81, and a rubber elastic body 93 disposed between the L-shaped metal ring 91 and the rack housing 82. Provision of the L-shaped metal ring 91 improves durability under high loads.

### Related Art Document

### Patent Document

Patent Document 1: Japanese Patent Application Laid-Open Publication No. 2016-136031.

### SUMMARY OF THE INVENTION

### Problems to be solved by the invention

The L-shaped metal ring 91 includes two portions: a portion that extends along a central axis A of the rack bar 81, and a portion that extends radially. Consequently, the L-shaped metal ring 91 occupies a substantial area of the buffer stopper 9, which results in high manufacturing costs.

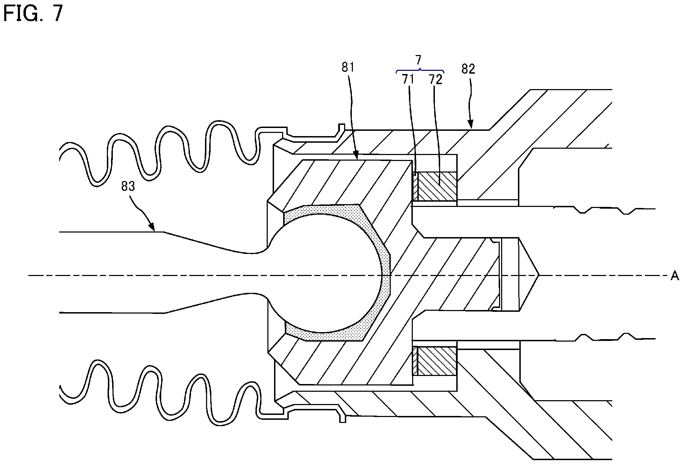

FIG. 7 shows another conventional buffer stopper 7 that is designed to reduce manufacturing costs. The buffer stopper 7 shown in FIG. 7 includes a flat metal ring 71. A rubber elastic body 72 is disposed between the metal ring 71 and the rack housing 82. Since the metal ring 71 is formed to be flat, manufacturing costs can be reduced.

In the buffer stopper 7 of the related art, reduction in impacts between the rack bar 81 and the rack housing 82 is mainly achieved by the rubber elastic body 72. In such a configuration, if lubricating grease applied to the rack bar 81 ingresses to an interface between the rack housing 82 and the rubber elastic body 72, a coefficient of friction at a contact surface each of the rack housing 82 and the rubber elastic body 72 decreases. Consequently, the rubber elastic body 72 becomes susceptible to deformation, and an amount of deflection undesirably increases. As a result, durability of the buffer stopper 7 is liable to decrease.

Accordingly, there is a demand for a buffer stopper that achieves improved durability at low cost as compared to the related art.

### Means for solving the problems

To solve the above problems, a buffer stopper according to an aspect of this disclosure is disposed between a flange and a protrusion, in which the flange has a first annular surface that extends from an outer peripheral surface of a shaft movable in an axial direction, and the protrusion has a second annular surface that is spaced apart from and faces the first annular surface and extends from an inner peripheral surface of a housing toward the shaft. The buffer stopper includes: a metal ring that is in contact with the first annular surface; an annular buffer base that is disposed between the metal ring and the second annular surface and is bonded to the metal ring; an annular member that is disposed between the buffer base and the second annular surface and is bonded to the buffer base. The buffer base includes a rubber elastic material. The metal ring is an annular flat plate. The annular member is spaced apart from the metal ring and is disposed radially inward of the buffer base. A stiffness of the annular member is greater than a stiffness of the buffer base.

### Effect of the Invention

This disclosure makes it possible to improve both buffering performance and durability at low cost as compared with the related art.

### BRIEF DESCRIPTION OF THE DRAWINGS

FIG. 1 is a cross-sectional view showing a portion of a steering device including a buffer stopper according to an embodiment.
FIG. 2 is a cross-sectional view showing a portion of the buffer stopper according to this embodiment.
FIG. 3 is an enlarged cross-sectional view of a portion of the buffer stopper according to this embodiment.
FIG. 4 is a characteristic diagram of the buffer stopper according to this embodiment.
FIG. 5 is a cross-sectional view of a buffer stopper according to a modification.
FIG. 6 is a diagram showing a conventional buffer stopper.
FIG. 7 shows another conventional buffer stopper that is designed to reduce manufacturing costs.

### MODES FOR CARRYING OUT THE INVENTION

Preferred embodiments of this disclosure will now be described below with reference to the accompanying drawings. In the drawings, for sake of clarity dimensions or scales may be changed as appropriate. Unless otherwise specifically stated, the scope of this disclosure is not limited to the embodiments described below.

### 1. Steering Device

In one example, a rack-and-pinion steering device is used in a vehicle, such as an automobile. The steering device includes a steering wheel for operation by a driver, a steering shaft coupled to the steering wheel, a pinion gear coaxial with the steering shaft, and a shaft including a rack gear that converts rotation of the pinion gear into axial movement. Axial movement of the shaft is transmitted to wheels via tie rods. As the shaft moves, the tie rods swing relative to the shaft, thereby enabling steering of corresponding wheels. The shaft is accommodated in a housing.

Such a steering device includes a damper device that reduces impacts between the shaft and the housing caused by swinging of the tie rods.

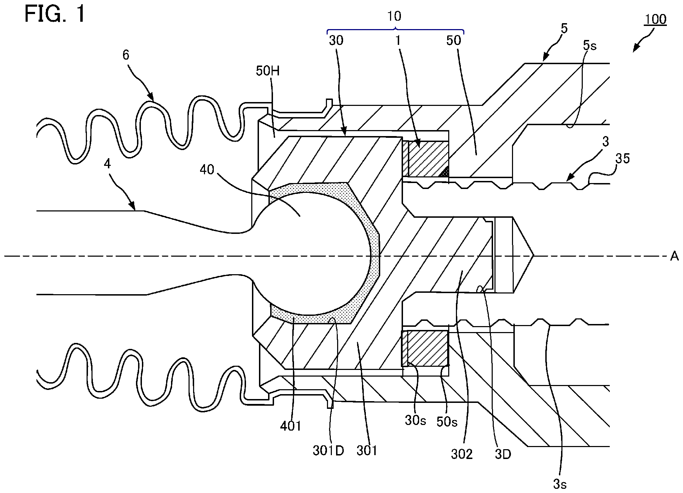

FIG. 1 is a cross-sectional view showing a portion of a steering device 100 that includes a buffer stopper 1 according to the embodiment. Specifically, the steering device 100 includes a shaft 3, a tie rod 4, a housing 5, a rack boot 6, and a damper device 10. The damper device 10 includes a flange 30, a protrusion 50, and a buffer stopper 1. The flange 30 is connected to the shaft 3, and the protrusion 50 is connected to the housing 5. The flange 30 may be deemed as part of the shaft 3, and the protrusion 50 may be deemed as part of the housing 5.

In one example, the shaft 3 is cylindrical and includes a rack gear 35 that extends in an axial direction. As used herein, the term "axial direction" refers to a direction along a central axis A of the shaft 3 and corresponds to a longitudinal direction of the shaft 3. The rack gear 35 meshes with a pinion gear (not shown) to convert rotational motion of the pinion gear into linear motion along the central axis A. The shaft 3 is axially movable and is typically made of a metal.

The housing 5 is a cylindrical member that accommodates the shaft 3 and is fixed to a vehicle body (not shown). In one example, the cylindrical housing 5 extends axially, and an inner diameter of the housing 5 is slightly greater than an outer diameter of the shaft 3. The housing 5 may be made of a metal.

The flange 30 of the damper device 10 is a stud end attached to an end portion of the shaft 3. The flange 30 may be made of a metal and includes a flange base 301 and a convex portion 302.

In one example, the flange base 301 is cylindrical and has an outer diameter greater than that of the shaft 3. The flange base 301 defines an opening 301D. The opening 301D is a bottomed hole that opens from a side of the flange base 301 opposite the convex portion 302. A ball joint 40 of the tie rod 4 is accommodated in the opening 301D via a buffer material 401. The tie rod 4 swings about the central axis A as the rack gear 35 moves along the central axis A.

The flange base 301 has a first annular surface 30s that extends radially outward from an outer peripheral surface 3s of the shaft 3. As used herein, the term "radially outward" refers to a direction orthogonal to the central axis A of the shaft 3 and away from the central axis A.
Hereinafter, a term "radially inward" refers to a direction orthogonal to the central axis A of the shaft 3 and away from the housing 5 toward the central axis A. Further, a term "radial direction" refers to a direction orthogonal to the central axis A of the shaft 3.

The convex portion 302 protrudes from the flange base 301 toward the shaft 3, and is integrally formed with the flange base 301. In one example, the convex portion 302 is cylindrical. A recess 3D is disposed at an end portion of the shaft 3, and the convex portion 302 is disposed in the recess 3D. In one example, one of the inner peripheral surface of the recess 3D or the outer peripheral surface of the convex portion 302 is provided with a female thread, and the other surface is provided with a male thread. The convex portion 302 and the recess 3D are threaded together to couple the flange 30 to the shaft 3.

The protrusion 50 of the damper device 10 is an annular structure that extends radially inward from an inner peripheral surface 5s of the housing 5 and is integrally formed with the housing 5. The protrusion 50 surrounds the outer peripheral surface 3s of the shaft 3. In one example, the protrusion 50 is annular and has an inner diameter slightly larger than the outer diameter of the shaft 3. The protrusion 50 is spaced apart from the flange base 301.

The protrusion 50 has a second annular surface 50s. The second annular surface 50s is an end surface of the protrusion 50 located closer to the flange 30. The second annular surface 50s extends radially inward from the inner peripheral surface of the housing 5. The second annular surface 50s is spaced apart from and faces the first annular surface 30s.

The housing 5 includes a receiving portion 50H. The receiving portion 50H defines a space bounded by the second annular surface 50s, and a portion of the inner peripheral surface 5s of the housing 5 that extends from the protrusion 50 toward the ball joint 40. The flange base 301 is accommodated in the receiving portion 50H. An inner diameter of a wall that defines the receiving portion 50H is greater than the outer diameter of the flange base 301. The rack boot 6 is connected to the housing 5. The rack boot 6 includes cylindrical bellows and accommodates the tie rod 4.

The buffer stopper 1 of the damper device 10 is disposed between the flange 30 and the protrusion 50. Specifically, the buffer stopper 1 is disposed between the first annular surface 30s of the flange 30 and the second annular surface 50s of the protrusion 50. The buffer stopper 1 reduces impacts between the shaft 3 and the housing 5 caused by swinging of the tie rod 4.

### 2. Buffer Stopper

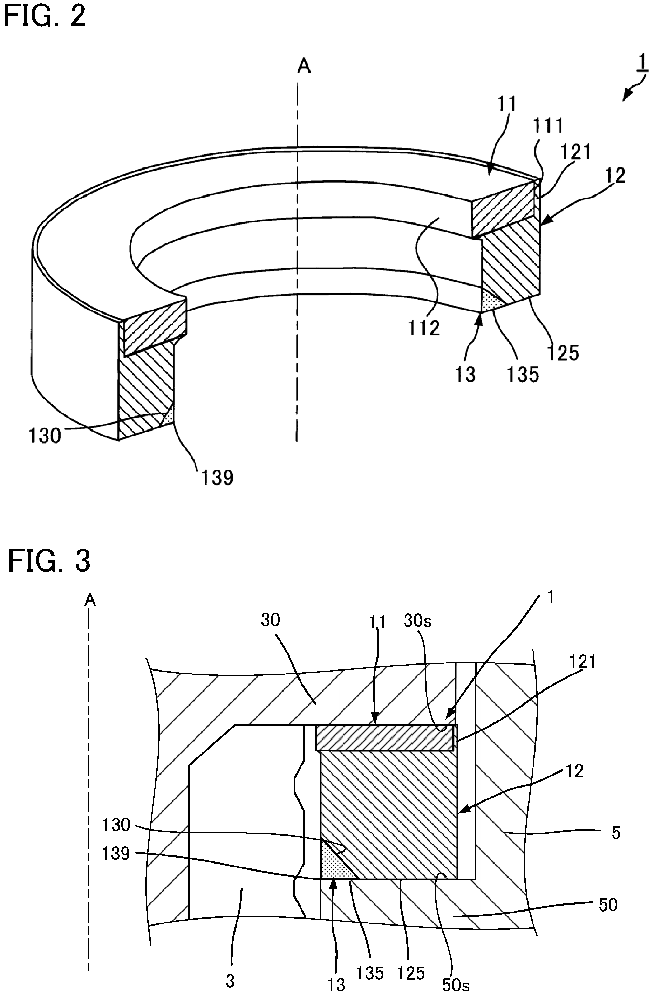

FIG. 2 is a cross-sectional view showing a portion of the buffer stopper 1 according to this embodiment. As shown in FIG. 2, the buffer stopper 1 includes a metal ring 11, a buffer base 12, and an annular member 13.

The metal ring 11 is an annular flat plate. In this embodiment, the metal ring 11 is flat.
In one example, the metal ring 11 may be made of a metal, such as hot-rolled mild steel sheet (e.g., SPHC).

In one example, the buffer base 12 may be joined to the metal ring 11 by bonding, such as by vulcanization. In this embodiment, the buffer base 12 is tubular and is substantially cylindrical. An axial length of the buffer base 12 is greater than the axial thickness of the metal ring 11. The buffer base 12 is elastic and absorbs impacts. A stiffness of the buffer base 12 is less than the stiffness of the metal ring 11. The buffer base 12 is formed of a rubber elastic material. The term "rubber elastic material" encompasses thermosetting elastomeric rubber, synthetic resins having rubber elasticity, and mixed materials containing rubber. From the viewpoint of high hardness and improved durability, the buffer base 12 is preferably made of Nitrile Butadiene Rubber (NBR), and more preferably NBR compounded with carbon black.

The buffer base 12 has an outer diameter (OD) and an inner diameter (ID). A difference between the OD and the ID (hereinafter, an "OD-ID difference") is slightly less than that of the metal ring 11, but may be equal thereto. As used herein, the term "OD-ID difference" denotes a radial length. Further, a volume of the buffer base 12 in the buffer stopper 1 is greater than that of the metal ring 11 in the buffer stopper 1.

The buffer base 12 includes a covering portion 121 that covers the outer peripheral surface 111 of the metal ring 11. The inner peripheral surface 112 of the metal ring 11 is not covered by the buffer base 12.

In one example, the annular member 13 may be bonded to the buffer base 12 using vulcanization. In this embodiment, the annular member 13 is ring-shaped. The annular member 13 is disposed on the surface of the buffer base 12 opposite the metal ring 11. The annular member 13 is spaced apart from the metal ring 11. In other words, the buffer base 12 includes a portion located between the annular member 13 and the metal ring 11. The annular member 13 is disposed radially inward of the buffer base 12.

A volume of the annular member 13 in the buffer stopper 1 is less than that of the buffer base 12 in the buffer stopper 1 and is also less than that of the metal ring 11 in the buffer stopper 1. Further, the OD-ID difference of the buffer base 12 is less than that of the buffer base 12. Further, in this embodiment, the OD-ID difference of the annular member 13 increases in a direction away from the metal ring 11.

A stiffness of the annular member 13 is greater than a stiffness of the buffer base 12. In one example, a Young's modulus of the annular member 13 may be greater than a Young's modulus of the buffer base 12. The annular member 13 may be formed from a resin, or a rubber elastic material.

A Young's modulus of the annular member 13 may range from 100 MPa to 1000 MPa but is not limited thereto. In one example, a Young's modulus of the buffer base 12 may range from 1 kgf/cm2 to 100 kgf/cm2 but is not limited thereto. A Young's modulus of the metal ring 11 may range from 10 GPa to 500 GPa but is not limited thereto.

FIG. 3 is an enlarged cross-sectional view of a portion of the buffer stopper 1 according to this embodiment. As shown in FIG. 3, the buffer stopper 1 is disposed between and is in contact with the first annular surface 30s and the second annular surface 50s. In one example, the buffer stopper 1 may be press-fitted between the first annular surface 30s and the second annular surface 50s such that the buffer base 12 is elastically deformed. In the example shown in FIG. 3, the buffer stopper 1 is not in contact with both the shaft 3 and the housing 5; however, the buffer stopper 1 may be in contact with the shaft 3.

The metal ring 11 of the buffer stopper 1 is in contact with the first annular surface 30s. The buffer base 12 and the annular member 13 are each in contact with the second annular surface 50s. Specifically, an end surface 125 of the buffer base 12, which is opposite to the metal ring 11, and an end surface 135 of the annular member 13, which is opposite to the metal ring 11, are each in contact with the second annular surface 50s. As shown in FIG. 2, when the buffer stopper 1 is not installed between the first annular surface 30s and the second annular surface 50s (i.e., in an uninstalled state), the end surface 125 and the end surface 135 are continuous without any step and are flush with each other.

The buffer stopper 1 receives an impact transmitted via the metal ring 11 under swinging of the tie rod 4, thereby causing the buffer base 12 to be compressed and resiliently deformed. When the flange 30 moves toward the protrusion 50, the spacing between the first annular surface 30s and the second annular surface 50s is reduced, and the buffer base 12 is compressed in the axial direction and expands radially inward and radially outward. Thus, the buffer stopper 1 is compressed between the first annular surface 30s and the second annular surface 50s. Consequently, the buffer stopper 1 primarily absorbs impacts by the buffer base 12.

The buffer stopper 1 includes the metal ring 11, the buffer base 12, and the annular member 13. The metal ring 11 is in contact with the first annular surface 30s and is an annular flat plate. The buffer base 12 contains a rubber elastic material, is disposed between the first annular surface 30s and the second annular surface 50s, and is joined to the metal ring 11. The annular member 13 contains a rubber elastic material, is disposed between the first annular surface 30s and the second annular surface 50s, and is joined to the buffer base 12.

Inclusion of the metal ring 11 allows the buffer stopper 1 to absorb loads that the buffer base 12 alone cannot absorb. The metal ring 11 is formed as a flat plate and thus can be produced as a single sheet, thereby enabling the volume of the metal ring 11 in the buffer stopper 1 to be reduced as compared with the related art. Manufacturing costs compared to the prior art are also reduced.

The stiffness of the annular member 13 is greater than the stiffness of the buffer base 12. As a result, a contact pressure of the annular member 13 against the second annular surface 50s is greater than the contact pressure of the buffer base 12 against the second annular surface 50s. The annular member 13, which is disposed radially inward of the buffer base 12, acts as a sealing member and prevents ingress of lubricating grease into the interface between the buffer base 12 and the second annular surface 50s. Thus, provision of the annular member 13 prevents lubricating grease applied to the shaft 3 from moving radially outward and ingressing into the interface between the buffer base 12 and the second annular surface 50s. As a result, durability of the buffer base 12 is enhanced.

If the annular member 13 is not provided, lubricating grease is liable to ingress into the interface between the buffer base 12 and the second annular surface 50s, and as a result a coefficient of friction at the interface between the end surface 125 of the buffer base 12 and the second annular surface 50s decreases. The reduction in friction makes the buffer base 12 susceptible to deformation, leading to excessive deflection and, consequently, impaired durability of the buffer stopper 1.

In contrast, in this embodiment, the provision of the annular member 13 suppresses ingress of lubricating grease into the interface between the buffer base 12 and the second annular surface 50s. As a result, a decrease in the coefficient of friction is unlikely to occur. Consequently, deformation of the buffer base 12 and excessive deflection are suppressed, and durability of the buffer stopper 1 can be improved.

The annular member 13 is spaced apart from the metal ring 11. As a result, even when the first annular surface 30s and the second annular surface 50s move toward each other and the buffer base 12 is axially compressed, the annular member 13 is less likely to be pinched between the metal ring 11 and the second annular surface 50s and damaged. If the annular member 13 were to be connected to the metal ring 11, axial compression of the buffer base 12 could cause the annular member 13 to be crushed and fractured between the metal ring 11 and the second annular surface 50s. In addition, since the annular member 13 is spaced apart from the metal ring 11, axial compression of the buffer base 12 more easily permits elastic deformation of the buffer base 12 in the radial direction.

As described above, the annular member 13 is disposed radially inward of the buffer base 12. In this configuration, the buffer base 12 is in contact with the second annular surface 50s. As a result, buffering provided by the buffer base 12 is enhanced compared with a case in which the annular member 13 covers the end surface 125 of the buffer base 12 and the buffer base 12 is not in contact with the second annular surface 50s.

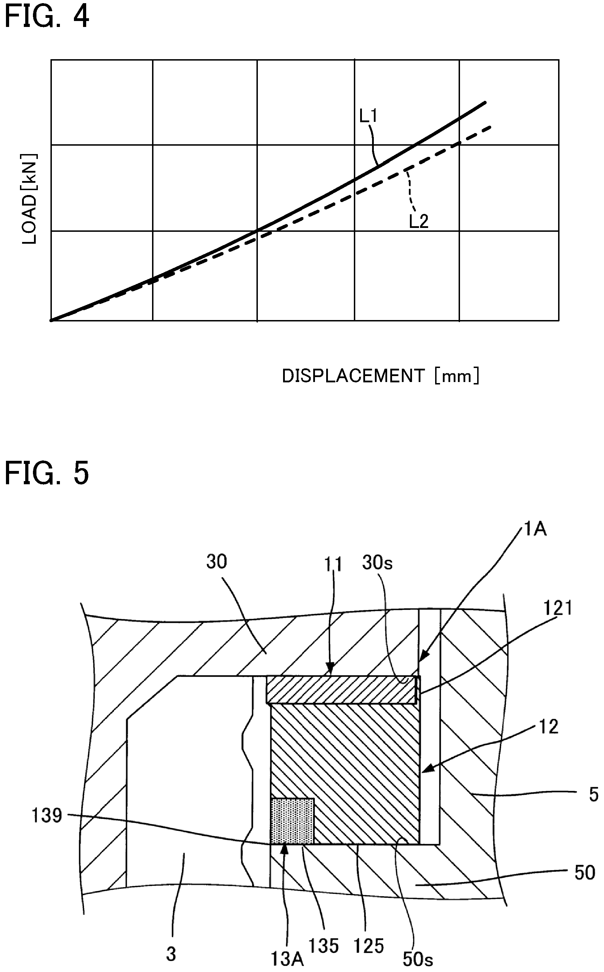

FIG. 4 is a characteristic diagram of the buffer stopper 1 according to this embodiment. As shown in FIG. 4, the horizontal axis represents displacement [mm] of the buffer stopper 1, and the vertical axis represents load [kN] applied to the buffer stopper 1. Displacement of the buffer stopper 1 corresponds to axial compressive strain of the buffer base 12.

A characteristic curve (solid-line) L1 represents the buffer stopper 1 according to this embodiment. A characteristic curve (dashed-line) L2 represents the buffer stopper 7 according to the comparative example shown in FIG. 7. The buffer stopper 1 according to this embodiment includes the annular member 13, whereas the buffer stopper 7 according to the comparative example does not include the annular member 13. A volume of the buffer stopper 1 of this embodiment is identical to that of the buffer stopper 7 of the comparative example.

The slope of the characteristic curve L1 is greater than that of the characteristic curve L2 of the comparative example. Accordingly, a linear region of the characteristic curve L1 (i.e., a region below the curve L1) is greater than a linear region of the characteristic curve L2 (i.e., a region below the curve L2). Thus, compared to the comparative example, the buffer stopper 1 according to this embodiment absorbs more energy and exhibits a greater maximum compressive displacement. In this embodiment, the increased energy absorption reduces deflection upon impact, thereby improving both buffering performance and durability as compared with the comparative example. These improvements are achieved without increasing a volume of the buffer stopper 1.

When lubricating grease is present between the buffer base 12 and the second annular surface 50s, the coefficient of friction at the end surface 125 of the buffer base 12 is liable to decrease. Decreased friction is liable to cause increased internal stress in the buffer base 12 resulting in a reduction in its capacity to absorb energy. Consequently, an amount of energy that can be absorbed by the buffer base 12 is liable to decrease, thereby resulting in degradation of buffering performance. The buffer stopper 1 of this embodiment suppresses a reduction in buffering performance.

The foregoing annular member 13 may be made of either a metal or a resin, but preferably includes a resin. By forming the annular member 13 of a resin, the annular member 13 can be readily molded into a variety of shapes.

Use of a material as a resin for forming the annular member 13 is not particularly limited. However, super-engineering plastics such as polytetrafluoroethylene (PTFE) or polyether ether ketone (PEEK) are preferred, since they exhibit excellent durability and impact resistance. Use of such materials results in more effective suppression of ingress of lubricating grease between the buffer base 12 and the second annular surface 50s as compared with use of other materials.

The material of the annular member 13 preferably exhibits resistance to lubricating greases. Super engineering plastics such as PTFE and PEEK exhibit good resistance to a variety of lubricating greases.

A volume of the annular member 13 is, preferably, less than that of the buffer base 12. If a volume of the annular member 13 is greater than that of the buffer base 12, the buffering performance of the buffer stopper 1 is liable to deteriorate as compared with a case in which the annular member 13 has a smaller volume. Because the annular member 13 has a smaller volume than that of the buffer base 12, a buffering performance of the buffer stopper 1 is increased, which is in contrast with a case in which the annular member 13 has a larger volume than that of the buffer base 12.

As shown in FIG. 2, when no load is applied to the buffer stopper 1, two surfaces, namely, the end surface 125 of the buffer base 12 at an end opposite the metal ring 11, and the end surface 135 of the annular member 13 at an end opposite the metal ring 11, are flush with each other. Accordingly, compared to when there is a step between the end surfaces 125 and 135, it is easier to achieve a uniform contact pressure between the end surface 135 and the second annular surface 50s over the entire area of the end surface 135. This improved uniformity enhances the sealing performance of the annular member 13 and thereby more effectively suppresses ingress of lubricating grease between the buffer base 12 and the second annular surface 50s.

As shown in FIGS. 2 and 3, the bonding surface 130 of the annular member 13 for bonding with the buffer base 12, is inclined relative to the axial direction. The OD-ID difference of the annular member 13 increases in a direction away from the metal ring 11. Consequently, the shape of the annular member 13 in cross section is triangular.

FIG. 5 is a cross-sectional view of a buffer stopper 1A according to a modification. In the buffer stopper 1A shown in FIG. 5, the OD-ID difference of the annular member 13A is constant in the axial direction. Consequently, the shape of the annular member 13A in cross section is quadrangular. The annular member 13A provides effects similar to those of the aforementioned annular member 13.

Compared with the annular member 13A shown in FIG. 5, the annular member 13 shown in FIG. 3 produces a higher contact pressure against the second annular surface 50s. With the annular member 13 shown in FIG. 3, as the first annular surface 30s and the second annular surface 50s move toward each other, a force acting on the buffer base 12 is transmitted to the bonding surface 130. Approach of the first annular surface 30s and the second annular surface 50s towards each other allows a greater force to be applied by the distal end portion 139 of the annular member 13 to the second annular surface 50s. Accordingly, a sealing performance provided by the annular member 13 is enhanced. Thus, suppression of ingress of lubricating grease between the buffer base 12 and the second annular surface 50s is particularly effective. Accordingly, the buffer stopper 1 provides both improved durability and buffering performance.

The annular member 13 is not limited to the shapes in cross section shown in FIGS. 3 and 5. The bonding surface 130 may be curved.

As described above, the buffer base 12 includes the covering portion 121 that covers the outer peripheral surface 111 of the metal ring 11. The covering portion 121 prevents the metal ring 11 from coming into contact with the housing 5, even if the tie rod 4 swings such that the buffer stopper 1 comes into contact with the housing 5. Consequently, undesirable noise that would otherwise be generated from contact between the metal housing 5 and the metal ring 11 is prevented.

### 2. Modification

The foregoing embodiment may be modified in various ways. The damper device 10 including the buffer stopper 1 or 1A is applicable not only to vehicles but also to transportation equipment and industrial equipment.

Although this disclosure has been described with reference to the preferred embodiment, this disclosure is not limited thereto. The components of this disclosure may be replaced with components having functions similar to those of the foregoing embodiment, and additional components may be incorporated.

### 3. Appendices

The following aspects are understood from the foregoing embodiment or modifications.

A buffer stopper of Aspect 1, which is a preferred example of this disclosure, is disposed between a flange and a protrusion, in which the flange has a first annular surface that extends from an outer peripheral surface of a shaft movable in an axial direction, and the protrusion has a second annular surface that is spaced apart from and faces the first annular surface and extends from an inner peripheral surface of a housing toward the shaft. The buffer stopper includes: a metal ring that is in contact with the first annular surface; an annular buffer base that is disposed between the metal ring and the second annular surface and is bonded to the metal ring; an annular member that is disposed between the buffer base and the second annular surface and is bonded to the buffer base. The buffer base includes a rubber elastic material. The metal ring is an annular flat plate. The annular member is spaced apart from the metal ring and is disposed radially inward of the buffer base. A stiffness of the annular member is greater than a stiffness of the buffer base.

According to Aspect 1, the metal ring is formed as a flat plate and thus can be produced as a single sheet at low cost, as compared with the related art.

The annular member is disposed radially inward of the buffer base, and the stiffness of the annular member is greater than that of the buffer base. This configuration prevents lubricating grease from ingressing into the interface between the buffer base and the second annular surface. As a result, durability of the buffer base is enhanced.

The annular member is spaced apart from the metal ring. Even when the buffer base is compressed, the annular member is less likely to be damaged. Thus, according to Aspect 1, it is possible to improve both buffering performance and durability at low cost.

In Aspect 2, which is a preferred example of Aspect 1, the annular member includes a resin.

As a result, the annular member can be readily molded into a variety of shapes, and a buffer stopper having excellent durability is provided.

In Aspect 3, which is a preferred example of Aspect 1, a volume of the annular member is less than a volume of the buffer base.

It is possible to reduce a decrease in buffering performance of the buffer stopper caused by a reduced occupancy of the buffer base resulting from providing the annular member.

In Aspect 4, which is a preferred example of Aspect 1, the buffer base further includes a portion that covers an outer peripheral surface of the metal ring.

Provision of the portion prevents the metal ring from coming into contact with the housing, and prevents generation of undesirable noise.

In Aspect 5, which is a preferred example of Aspect 1, an end surface of the buffer base at an end opposite the metal ring and an end surface of the annular member at an end opposite the metal ring are flush with each other.

As a result, it is easier to achieve a uniform contact pressure between the annular member and the second annular surface. Thus, suppression of ingress of lubricating grease between the buffer base and the second annular surface is enhanced.

In Aspect 6, which is a preferred example of Aspect 1, a bonding surface of the annular member, the bonding surface being bonded to the buffer base, is inclined relative to the axial direction. A difference between an outer diameter of the annular member and an inner diameter of the annular member increases in a direction away from the metal ring.

In Aspect 6, the distal end portion of the annular member can apply a greater force to the second annular surface. Thus, suppression of ingress of lubricating grease between the buffer base and the second annular surface is particularly enhanced.

### Description of Reference Signs

1... buffer stopper, 1A... buffer stopper, 2... buffer stopper, 3... shaft, 3s... outer peripheral surface, 4... tie rod, 5... housing, 5s... inner peripheral surface, 6... rack boot, 7... buffer stopper, 9... buffer stopper, 10... damper device, 11... metal ring, 12... buffer base, 13... annular member, 13A... annular member, 30... flange, 30s... first annular surface, 35... rack gear, 40... ball joint, 50... protrusion, 50H... receiving portion, 50s... second annular surface, 71... metal ring, 72... rubber elastic body, 81... rack bar, 82... rack housing, 83... tie rod, 91... L-shaped metal ring, 93... rubber elastic body, 100... steering device, 111... outer peripheral surface, 112... inner peripheral surface, 121... covering portion, 125... end surface, 130... bonding surface, 135... end surface, 139... distal end portion, 301... flange base, 301D... opening, 302... convex portion, 401... buffer material, A... central axis, L1... characteristic curve, L2... characteristic curve.

## Claims

1. A buffer stopper disposed between a flange and a protrusion, the flange having a first annular surface that extends from an outer peripheral surface of a shaft movable in an axial direction, and the protrusion having a second annular surface that is spaced apart from and faces the first annular surface and extends from an inner peripheral surface of a housing toward the shaft, the buffer stopper comprising:
a metal ring that is in contact with the first annular surface;
an annular buffer base that is disposed between the metal ring and the second annular surface and is bonded to the metal ring;
an annular member that is disposed between the buffer base and the second annular surface and is bonded to the buffer base,
wherein the buffer base includes a rubber elastic material,
wherein the metal ring is an annular flat plate,
wherein the annular member is spaced apart from the metal ring and is disposed radially inward of the buffer base, and
wherein a stiffness of the annular member is greater than a stiffness of the buffer base.

2. The buffer stopper according to claim 1,
wherein the annular member includes a resin.

3. The buffer stopper according to claim 1,
wherein a volume of the annular member is less than a volume of the buffer base.

4. The buffer stopper according to claim 1,
wherein the buffer base further includes a portion that covers an outer peripheral surface of the metal ring.

5. The buffer stopper according to claim 1,
wherein an end surface of the buffer base at an end opposite the metal ring and an end surface of the annular member at an end opposite the metal ring are flush with each other.

6. The buffer stopper according to claim 1,
wherein a bonding surface of the annular member, the bonding surface being bonded to the buffer base, is inclined relative to the axial direction, and
wherein a difference between an outer diameter of the annular member and an inner diameter of the annular member increases in a direction away from the metal ring.
